# EUROPEAN PATENT SPECIFICATION

(11) **EP 4 049 178 B1**
(45) Date of publication and mention of the grant of the patent: **15.05.2024**
(21) Application number: 20792451.5
(22) Date of filing: 22.10.2020
(51) Int. Cl.: B07C 5/34, G06V 10/145, G06V 10/22, G06V 30/144, G06K 7/14, G06K 19/06, G06K 19/08

(54) **METHOD OF IDENTIFYING AN ITEM, WASTE SEPARATION AND ITEM COMPRISING A DOT CODE**
VERFAHREN ZUR IDENTIFIZIERUNG EINES GEGENSTANDES, ABFALLABTRENNUNG UND ARTIKEL MIT EINEM PUNKTCODE
PROCÉDÉ D'IDENTIFICATION D'UN ARTICLE, SÉPARATION DE DÉCHETS ET ARTICLE COMPRENANT UN CODE À POINTS

(30) Priority: 22.10.2019 NL 2024079
(43) Date of publication of application: 31.08.2022
(73) Proprietor: Filimade Holding B.V., 7391 EK Twello (NL)
(72) Inventor: KERVER, Johannes Bernardus, 5653 RK EINDHOVEN (NL); VAN DOMMELEN, Bjørn-Erik Johan Willem Pieter Hendrik, 7391 EK TWELLO (NL)
(74) Representative: EP&C
(86) International application number: PCT/EP2020/079718
(87) International publication number: WO 2021/078842

(56) References cited:
- WO-A2-2016/204619
- US-B2- 9 010 640

## Description

The present invention relates to a method of identifying an item. Furthermore, the present invention relates to a method of waste separation. Still further, the present invention relates to an item provided with a dot code and to an item comprising such a dot code.

Plastic packages are employed for packaging consumer goods at a large scale. For example, plastic packages are applied to package food products such as beverages, salads, vegetables, etc.

Plastic packages may tend to cause damage to the environment. On the one hand, the plastics materials may take a long time to decompose when (undesirably) disposed in the environment. On the other hand, the recollection, separation based on type of plastics and recycling process may be complex and consume substantial energy, for example in order to separate the raw materials and remove contaminations.

WO2016/204619A2 discloses a method to identify an item, such as a plastic package, and a method of waste separation. The item is provided with a dot code formed by a pattern of dots arranged on a surface of the item. The pattern of dots is formed by a relief in the surface of the item. The item is irradiated by an illumination source, and an image of highlights and shades resulting from the illumination of the relief is captured by a camera. Identification of the item is performed based on information derived from the image of highlights and shades.

US 9 010 640 B2 discloses a stream dot technique forming a dot pattern at an arbitrary position on a curved surface body or a medium surface by including the step of linearly and consecutively arranging a plurality of reference dots according to a predetermined rule, providing a first virtual reference line which connects the plurality of reference dots, providing a second virtual reference line which is defined at a predetermined position from the reference dot and/or the first virtual reference line, providing a plurality of virtual reference points at predetermined positions on the second virtual reference line, and placing an information dot whose information is defined by a distance and a direction from the virtual reference point at an end point expressed by a vector with the virtual reference point being a start point.

A problem associated with the known prior art is that the code may be difficult to recognize, in particular when the item is e.g. damaged, dirty, supplied at a random orientation, etc.

The invention aims to enhance a readability of the dot code.

According to an aspect of the invention, there is provided a method of identifying an item, e.g. waste item, comprising the features of claim 1.

The item may be any item, such as a package, e.g. a bottle, a blister, a tray, a foil, etc. The item may be a plastic item. For example, the item may be a plastic package. The item may be a waste item, i.e. the identification may be performed in waste, e.g. in a stream of waste.

The plastic package may be any suitable plastic package, such as a bottle, a blister, a tray. The plastic package may comprise any plastic, such as polyethylene (PE), polyethylene terephthalate (PET), polypropylene (PP), or polyethyleenfuranoaat (PEF).

The item is provided with a linearly extending dot code. The code may be embodied in a form of a linearly extending string of dots. The dots of the linearly extending dot code may form a line, also referred to as the dot code line, such as a straight line or a curve.

Each dot may encode a value, e.g. a binary value, to be visible in an image of the item. Thus, the dots of the code may each have a binary value For example, the dots may be encoded in a form a relief. For example, one value of the dot may be encoded as a bump or recess in the surface of the item. Another value of the dot may be encoded as no bump or recess in the surface of the item. Alternatively, the other value of the dot may be encoded as another form of bump or recess in the surface of the item.

As another example, the dots of the code may each have a ternary value. For example, the dots may each be encoded as one of a bump, a recess and no deformation of the surface of the item. Thus, one of the ternary values may be encoded as a bump, one of the ternary values may be encoded as a recess and one of the ternary values may be encoded as no deformation (i.e. no bump and no recess). By the ternary dots, more data may be encoded per dot, in that for n dots, 3 to the power of n combinations may be provided instead of 2 to the power of n combinations as in the binary valued dots. For example, for 7 dots, a binary coding may provide 2 to the power of 7, i.e. 128 values while a ternary code may provide 3 to the power of 7, i.e. 2187 values. As the difference between bump, recess and no deformation may be reliably detected, more data may be reliably read from the dots, as compared to the dots having a binary value.

As a further example, the dots may each have a quaternary value. By the quaternary dots, more data may be encoded per dot, in that for n dots, 4 to the power of n combinations may be provided instead of 2 to the power of n combinations as in the binary valued dots. An example of quaternary coded dots may be, additionally to the bump, recess and no deformation as described with reference to the ternary code: a hole, a bump or recess having a different shape (e.g. an ellipse, e.g. a vertical or horizontal ellipse). An example of a hole could be a perforation in a foil, e.g. for fresh greens like lettuce.

The dots of the dot code are spaced apart along a line which extends along the surface of the item. The dots may be arranged equidistantly along the line. The line may be a straight line and/or may be any suitable curved line. Furthermore, the line may be provided with a bend, as explained in more detail below. Thus, the dots are spaced apart, one by one, i.e. one after the other, along the line.

The dot code comprises a predefined dot start code defining a start of the dot code and a predefined dot end code defining an end of the dot code. The dot start code and the dot end code are arranged at respective ends of the sequence of dots. The dot start code and the dot end code may each comprise a respective predefined dot pattern, i.e. a respective predefined sequence of dots. The dot code further comprises an identification dot code arranged along the dot code line between the predefined dot start code and the predefined dot end code. The identification code is thus, at one end of the line, preceded by the start code, and at the other end of the line, succeeded by the end code. The identification code comprises a sequence of dots that may provide identification data, e.g. in the form of a sequence of bits.

An image of the item is captured by a camera, such as a visible light camera, an IR camera, etc. The image may be a still image, e.g. a graphical data file, such as a jpg file, gif file, a raw data file of uncompressed image data, etc. Alternatively, the image may be a motion picture image, i.e. a sequence of images (e.g. image frames) e.g. embodied as a video data stream.

In the image, the predefined dot start code and the predefined dot end code is searched. The predefine dot start code and the predefined dot end code may each comprise a predefined pattern of dots, i.e. a predefined sequence of dots. The predefined sequence of dots may thereby form a predefined sequence of bits.

In the image, a direction of the predefined dot start code and a direction of the predefined dot end code is determined. The direction may be understood as an orientation of the respective dot code in the image.

A reading line is interpolated in the image to extend from the predefined dot start code to the predefined dot end code. The reading line may be understood as a line (such as a straight line or a curve) which extends from the dots of the dot start code to the dots of the dot end code. At the dot start code, a direction of the reading line corresponds to the direction of the predefined dot start code, i.e. coincides with the direction of the predefined dot start code. Similarly, at the predefined dot end code, the direction of the reading line corresponds to the direction of the predefined dot end code, i.e. coincides with the direction of the predefined dot end code. Thus, the reading line provides a line which connects the dot start code and the dot end code. As the reading line is interpolated to adhere, at its ends to the directions of the dot start code and the dot end code, the reading line is to follow an expected track along with the dots between the dot start code and the dot end code are expected to be found. The direction of the dot start code respectively dot end code may be understood as an angle in the image (i.e. in a plane of the image) or as an orientation of a curve. Accordingly, as the dot start code and/or dot end code may be curved, the direction thereof may be understood as to be formed by a curve. The term direction may accordingly also be understood as an orientation in the image plane of the image.

Along the reading line, the dots are read from the image. Thus, by following the reading line, a line is followed along which the dots between the dot start code and the dot end code are expected to be located. The reading line thereby forms a path on which the dots of the dot code are expected to be found.

Then, the identification code is derived from the dots (forming the linearly extending string of dots on the dot code line) as read along the reading line, i.e. from the reading line. Between the predefined dot start code and the predefined dot end code, the dots are located from which the identification code may be derived.

Even in case the item may have a yet unknown position, orientation and/or distance in respect of the camera that takes the image, the dot code may be identified and read at a relatively low processing power. Thereto, the dot start code and/or dot end code is searched in the image first, providing a relatively easy step (in terms of processing load) to search and recognize the dot start code and/or dot end code. Once these dot codes are recognized, an orientation thereof in the image is determined. Then, a reading line is interpolated so as to connect the dot start code and the dot end code. The reading line provides an expected path where the remaining dots between the dot start code and the dot end code are expected to be found. Thus, distortions in the image due to a different perspective of the image, a different orientation of the item, as well as due to bending of the surface of the item may be taken into account. Also, the dot code may be readable in a relatively quick way, despite factors that may adversely affect a readability of the code, such as the item being damaged or dirty. Damaging may translate into a bending of the surface, which may be taken into account as the reading line is interpolated based on the positions and orientations of the dot start code and dot end code: hence, a bending of the surface of the item may translate into a change in orientation of the dot start code and/or dot end code, thus resulting in a change of the reading line to following the bending of the surface of the item to some extent. Furthermore, as the linear code between the dot start code and the dot end code is read along (i.e. from) the reading line, the reading focusses on a specific area, i.e. a linear area following the line, hence may be less prone to disturbing factors such as contamination in a vicinity that could otherwise have affected/disturbed a reading of the code as the risk that such contamination is interpreted as a (non-existing) dot, may be reduced by the reading along the reading line.

The curve may be a Bezier curve, hence allowing to define a relatively smooth curve taking account of the position and orientation of the dot start code and dot end code. Also, as Bezier curves are applied in data processing, e.g. in graphics processing, graphical data processing tools to be able to perform the interpolation at a high speed, may be available. As the orientation of the item changes, the orientation of the dot start code and dot end code in the image may change, e.g. due to perspective effects, likewise resulting in a different perspective view of the dot code, which may be taken into account by corresponding Bezier curve interpolated from the dot start code and dot end code.

The interpolation of the Bezier curve may further take into account a centre marking, such as a centre dot. Deriving the centre dot from the image may assist to interpolate the Bezier curve, in that the centre dot provides an additional data point along the Bezier curve, thereby e.g. making the interpolation more robust.

More severe damage of the item may result in cracks in the surface of the item, e.g. providing for a kink in the linear dot code. In order to be able to take account of a kink in the dot code, the interpolation may be performed as follows:
in an embodiment, the interpolating in the image the reading line comprises:
interpolating in the image a curve to extend from the predefined dot start code to the predefined dot end code, wherein a direction of the curve (guiding line) at the predefined dot start code corresponds to the direction of the predefined dot start code, wherein the direction of the curve (guiding line) at the predefined dot end code corresponds to the direction of the predefined dot end code,
- interpolating a candidate reading line from at least three consecutive dots in the image;
- extrapolating the candidate reading line along the curve to an expected position of a following one of the dots;
- detecting in the image a position the following one of the dots;
- in case the detected position of the following one of the dots adheres to the expected position of the following one of the dots;
   - interpolating a following candidate reading line from the at least three consecutive dots and the following one of the dots.

Thus, as long as the following dot appears to adhere to the curve, which acts as a guiding line, the process continues with the candidate reading line, in each iteration adding a follows dot to the candidate reading line. The curve may be a Bezier curve.

In an embodiment, deviations may be taken into account by adjusting the curve according to the following candidate reading line. Thus, the interpolation may be made more robust, to adapt to minor deviations of the candidate reading line from the curve.

In case a difference between the detected position of the following one of the dots and the expected position of the following one of the dots exceeds a predetermined position threshold:
- assigning the candidate reading line to a reading line part associated with the at least three consecutive dots in the image, and
- interpolating a following candidate reading line for at least three following ones of the dots in the image.

Thus, per part of the dot code that adheres to relatively smooth transitions to the following dots, a separate candidate reading line may be interpolated. The reading line may thus be construed from a combination of the two (or more) candidate reading lines. Thus, in the case of one bend or kink in the dot code, the reading line may be construed from two candidate reading lines, each at a respective side of the bend or kink. Hence, starting from the dot start code, the reading line is interpolated on a dot by dot basis, whereby in each iteration a following dot is added to the interpolation. In case of no bends or kinks the process of iterations is followed until the dot end code is reached where the reading line is formed by the final iteration of the candidate reading line. In the case of one bend or kink, the following candidate reading line is again interpolated on a dot by dot basis, until the dot end code is reached. Then, the last iteration of the candidate reading line provides a part of the reading line from the start bit to the bend or kink, while the last iteration of the following candidate reading line provides the other part of the reading line from the bend or kink to the dot end code.

Furthermore, when reading along a candidate line that consists of at least the start dot code but which is interrupted by a kink (e.g. a fold) after the start dot code, one can reconnect the two parts by indexing the partial curves and looking for an intersection of two partial curves which fulfils the conditions that
a. the length of the joined partials is the same as the length of a single full curve
b. the partial curves consist of at least the dot start code (meaning we do not tolerate a fold in the start/end position markers themselves)

The reading line (respectively the candidate reading line) is interpolated according to a Bezier curve. The Bezier curve may be a first order, second order, third order or any other order of Bezier curve. The Bezier curve may form a relatively smooth transition, thereby enabling to follow smooth bends in the dot code pattern as a result of smooth bends in the surface of the item, in a relatively accurate way.

In an embodiment, further data is derived from a shape of the Bezier curve, in that the method further comprises: determining Bezier points that define the Bezier curve, and deriving additional data from respective locations of the Bezier points. Thus, a position of the Bezier points is applied to derive additional information therefrom. The Bezier points may be defined as follows. The ends of the Bezier curve are defined by a first Bezier point and a third Bezier point. A second Bezier point defines a path of the Bezier curve from the first Bezier point to the third Bezier point. For example a data bit may be encoded in an angle between a line from the first Bezier point to the second Bezier point and a line from the first Bezier point to the third Bezier point. The angle may be in an (absolute) range between 0 degrees and 90 degrees. For example, a bit is assigned based on the determination if the angle is (in absolute terms) < 45 degrees or > 45 degrees. In a 4 point Bezier curve, each end of the Bezier curve is likewise defined by a first and fourth Bezier point. Second and third Bezier points define a path of the Bezier curve from the first Bezier point to the fourth Bezier point. An angle is defined between a line from the first Bezier point to the second Bezier point and a line from the first Bezier point to the fourth Bezier point. Likewise, an angle is defined between a line from the fourth Bezier point to the third Bezier point and a line from the fourth Bezier point to the first Bezier point. Data may be encoded in both angles similarly to the 3 point Bezier curve. Alternatively, as a more robust encoding, a data bit may be encoded in the 4 point Bezier curve as follows: if the second and third Bezier point are on a same side of the line between the first and fourth Bezier points, the bit is assigned one value, and if the second and third Bezier point are on a opposite sides of the line between the first and fourth Bezier points, the bit is assigned the other value. Hence, the shape of the dot sequence may be applied to encode additional information, hence being able to encode a relatively large amount of data is a relatively low amount of dots. Thus encoding a relatively large amount of data in a dot pattern that can be retrieved relatively quickly from the image.

The dot start code pattern and dot end code pattern are mirrored copies of each other, in other words the predetermined dot end code (also identified as predefined dot end code) and the predetermined dot start code (also identified as predefined dot start code) represent a same dot code, when read towards a centre of the linearly extending dot code. Thus searching of the dot start code and the dot end code may be facilitated, as the dot start code and the dot end code are largely similar, thus enabling image recognition software to search for the same pattern both the find a dot start code as well as to find a dot end code. Thereby, the searching of the dot start code and dot end code may be facilitated.

In line with the mirroring of the dot start code and the dot end code, in an embodiment, the identification code is arranged in duplicate along the dot code line between the predefined dot start code and the predefined dot end code. The duplicates may be formed by a respective reading from the predefined dot start code to a centre of the linearly extending dot code and by a respective reading from the predefined dot end code to a centre of the linearly extending dot code. Thus the identification code between the dot start code and the dot end code may be provided in duplicate, whereby the duplicates may be mirrored. On the one hand, redundancy may be provided in that it may be checked if the identification code as read along, i.e. from, the reading line is correct by comparing the mirrored duplicates. On the other hand, speed of reading may be improved, as the symmetry in the code enables to read the code ether ends, in particular in case the dot start code and dot end code are the same also.

In an embodiment, each of the dots has a binary value. At least one of the binary values is represented by a predefined local deformation of the surface of the item. The predefined local deformation may be a bump (i.e. a protrusion on the surface of the item) or a recess (i.e. an intrusion on the surface of the item). Thereby, the dots may be visible without the need of adding any ink, fluorescent marker, or similar to the item, thus avoiding a chemical contamination of a material from which the item is made. The predefined local deformation may be readable by irradiating the item with a source of light, thereby causing the deformation(s) to generate a highlight, a shade or both. This latter method of reading out may likewise be applied in case the item is (at least partially) transparent.

In an embodiment, the other one of the binary values is represented by no local deformation of the surface of the item, e.g. no bump, no recess. Thereby, an obtrusiveness of the dot code on the surface of the item may be reduced, as only one of the binary values is coded by a deformation, while the other one of the binary values is coded by no deformation, thus resulting in a reduction in the amount of deformation, hence in a reduction of a modification of the surface of the item due to the application of the dot code. The interpolation of the reading line may be particularly advantageous in the case where one of the binary values of the dot code is represented by no deformation, as the interpolated reading line may indicate the locations of dots that are coded by no deformation, from the interpolation based on the dots that are coded by a deformation. In such embodiment, the interpolation may accordingly take place using the dots that are coded by a deformation, while the dots that are not coded by a deformation are discarded in the interpolation. In fact, the position of the dots that are coded by no deformation is retrieved by the interpolated reading line.

In order to be able to recognize the dot start code (and similarly, the dot end code), the predefined dot start code starts with two dots having a value represented by the predefined local deformation. By starting (respectively ending) with dots that are coded by a deformation, the dot start code and dot end code as well as the orientation thereof may be recognized more easily in the image, hence enabling to perform the interpolation of the reading line over dots that are coded by no deformation as well, using a well-defined starting point. The dots that are coded by a deformation The dot start code, respectively the dot end code, may for example start with bot pattern 1101, e.g. represented by the dot pattern ddnd (where d stands for deformation and n stands for no deformation), thus to provide a pattern which is on the one hand easily recognizable and on the other hand provides sufficient deformations for it to indicate the position and orientation in a defined way.

The predefined local deformation may be a protrusion. On the one hand, illuminating the protrusions by a source of radiation may provide for highlights (at leading edges) and shades (at trailing edges), hence enabling to make the protrusions well visible in the image. On the other hand, the protrusions may reduce a contact surface when the item slides along another surface, such as an, e.g. stationary, guiding surface or a surface of another, e.g. similar, item.

Alternatively to the binary value, each of the dots may have a ternary value, at least two of the ternary values being represented by respective predefined local deformations of the surface of the item. Using for example the encoding bump (value 0), recess (value 1) and no local deformation (value 2) of the surface of the item, a relatively large amount of data may be stored in a relatively small number of dots, while being able to be read in a reliable way, as bump, recess and no deformation may be distinguished n the image. In order to easily find the start code and the orientation thereof, the predefined dot start code starts with two dots having a value represented by the respective predefined local deformations (e.g. bumps and/or recesses).

In an embodiment, the reading locations are arranged equidistantly along the reading lines, and the dots are read along the reading line at the equidistant reading locations. Thereby, on the one hand, the dots may be retrieved quickly, as the expected location of the dots may be defined by the reading location. On the other hand, dots that are encoded by no deformation may be reliably read, as the fact that no deformation is detected at the reading location may be translated into the dot value associated with no deformation. This may likewise apply in case two or more consecutive dots in the sequence are encoded as no deformation.

In order to increase a chance of finding a readable code pattern in the image, despite variations in orientation, distance, contamination, deformation or damage of the item or other factors, a plurality of the dot codes may be provided on the item, the dot codes each provided in a different orientation along the surface of the item. The dot codes may e.g. be randomly distributed (e.g. scattered) or evenly distributed over the surface of the item.

According to a further aspect of the invention there is provided a method of waste separation comprising:
- identifying the item according to the method of the invention, and
- separating the item in accordance with the identification.

According to a yet further aspect of the invention, there is provided an item comprising a dot code comprising plural dots, the dots of the dot code being spaced apart along a dot code line extending along a surface of the item and form a linearly extending string of dots on the dot code line, the dot code comprising a predefined dot start code defining a start of the dot code, a predefined dot end code defining an end of the dot code, and an identification dot code arranged between the predefined dot start code and the predefined dot end code, the predefined dot start code, the identification code and the predefined dot end code being arranged on the dot code line, the item having the features of claim 1.

The item according to the invention may be employed in the method according to the invention. With the item according to the invention, the same or similar advantages and effects may be achieved as with the method according to the invention. Furthermore, the same or similar embodiments, as described with reference to the method according to the invention, may apply to the item according to the invention, thereby achieving the same or similar effects.

Further features, advantages and effects of the invention will follow from the appended drawing and the below description wherein non limiting embodiments of the invention are described, wherein:
Figure 1 depicts a linear dot code;
Figure 2 depicts an item provided with linear dot codes;
Figure 3A and 3B depict embodiments of linear dot codes
Figures 4A - 4D illustrate an interpolation of a reading line on a linear dot code
Figure 5A - 5D illustrate three point Bezier curves and 4 point Bezier curves,
Figure 6 depicts a part of a surface of an item comprising scattered linear dot codes, and
Figures 7A and 7B illustrates a detection of a recess respectively a bump..

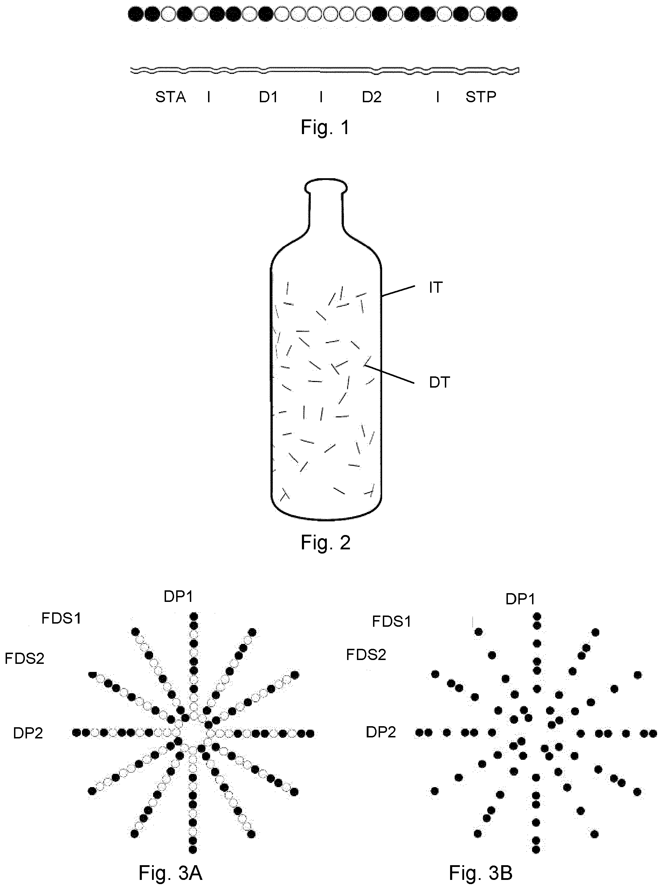

Figure 1 depicts a linear dot code comprising a linear sequence of dots. In the schematic representation, the dots are schematically indicated by a circle filled with black respectively by a circle filled with white. A corresponding surface of the item is depicted below the sequence of black and white filled circles, and provides an exemplary cross sectional view of a part of the item, e.g. a part of a wall of the item. As follows from the cross sectional view, the dots are encoded as deformations of the surface of the item: In the present embodiment, one dot value is encoded as an intrusion, and one dot value is encoded as no deformation of the surface of the item. Specifically, in the present embodiment, the black dots are encoded as deformations, namely intrusions, while the white dots are encoded as no deformation of the surface of the item. Alternatively, the white dots could for example be encoded as intrusions or other types of deformations other than the protrusions. Thus for example, the code may be built from dots each represented by a protrusions (bumps) resp. an intrusion (recesses).

Reverting to the present example, the linear dot code comprises, when following the pattern of dots from left to right in the plane of drawing: a predefined dot start pattern STA, data dots D1, followed by a mirrored copy of the data dots D2, followed by a predefined dot end pattern STP. In the present example, the predefined dot end pattern forms a mirrored copy of the predefined dot start pattern, thus effectively the predefined start and stop patterns being the same. In the present example, the dot start pattern and the dot end pattern are each formed by 5 dots, i.e. 5 dots, while the identification code, i.e. the payload, i.e. the identification data, is formed by 7 dots. One or more additional dots may be arranged between data dots and the mirrored data dots to mark a centre point of the dot code pattern, so as to enable to retrieve the pair of data dots and mirrored data dots more reliably of more quickly from the image.

As follows from the present example, the predefined dot start code is 11010, in fact ddndn, whereby d stands for deformation, and n stands for no deformation. Alternatively, the dot code may be referred to as bbobo, whereby b stands for a bump and o stands for a flat part of the surface.

Figure 2 depicts an example of an item IT, such as in the present case a bottle, such as a plastic bottle. Examples of the item may include a plastic package, such as a tray, a bottle, a stand up pouch, a blister, a foil, etc. The item may e.g. comprise a plastic, such as polyethylene (PE), polyethylene terephthalate (PET), polypropylene (PP), or polyethyleenfuranoaat (PEF) or any other plastic. In the present example, the linear dot code DT arranged on the outside surface of the bottle plural times, whereby in the present example the orientations of the dot codes differs, e.g. the dot codes being arranged at a random or scattered orientation on the surface of the item. The dot codes may be arranged randomly on the surface of the item or may be equidistantly spread over the surface thereof. As a result, a readability of the dot code may be improved under adverse circumstances, as disturbing factors, such as contamination on the surface of the item, reflections, etc., are likely to depend on position, orientation, etc., hence may affect a reading of some of the dot codes only. This may in particular play a role in a round package such as a bottle, where reflections as a result of the illumination by a source of illumination may occur at specific zones of the round surface of the item. Due to a random orientation of the items to be identified, reflections may occur at different locations, causing a disturbance of some of the various copies of the linear dot code, thereby implying that other copies of the linear dot code may remain visible.

When an image is captured it often occurs that a hard reflection of the light source is visible on the image. This hard reflection, after inversion, provides a black area in which many possible match points are found but which may not result in a correct watermark readout. To eliminate such hard reflections one may pre-process the image by applying a mask which is excluded from the readout which is equal to the n-times eroded image (erosion removes small spots from the image but leaves large areas relatively intact; these large areas which are left intact by the erosion process constitute the hard reflection. Small reflections which constitute the data point are removed by the erosion process. Using the result as a mask may provide that the area of the hard reflection is not processed).

Figure 3A and 3B depict other examples of a linear dot code. In figure 3A, the dot code pattern is arranged in the surface of the item twice, namely dot code pattern 1 DP1 arranged vertically and dot code pattern 2 DP2 arranged horizontally. The dot code patterns DP1 and DP2 are each symmetrical, and in fact are substantially the same as the dot code depicted in Figure 1. Thus, depending on an orientation, reflection angle, etc., either one of DP1 and DP2 may be read in order to read the dot code pattern and derive the information bits therefrom.

Additionally the dot code patterns comprise further dot sequences FDS1 and FDS2. The further dot sequences are arranged at respective angles in respect of the dot code patterns DP1 and DP2. In the present example, the further dot code sequences FDS1 and FDS2 are arranged at 30 degrees respectively 60 degrees in respect of the dot code pattern DP1, whereby the centres of all dot codes, i.e. DP1, DP2, FDS1 and FDS2 coincide, thus forming a star shaped pattern. Additional data such as manufacturer information and/or product information may be added. Furthermore, the star shape may be associated by consumers with a snow star, hence associating the package with low temperature. Thus, on a package of e.g. a cold drink, a consumer may not be obtruded by the presence of the marker, and even positively associate the snow start with cold drinks.

The further dot sequences FDS1 and FDS2 would not require a dot start code and a dot end code, as the dot start code and dot end code of the dot patterns DP1 and DP2 may initially be retrieved, while the further dot sequences are found at predetermined angles in respect of the dot patterns DP1 and DP2. As a result of the absence of a dot start pattern and dot end pattern in the further dot sequences, additional information may be decoded therein, e.g. in the present example 7 + 5 bits = 12 bits per further dot sequence.

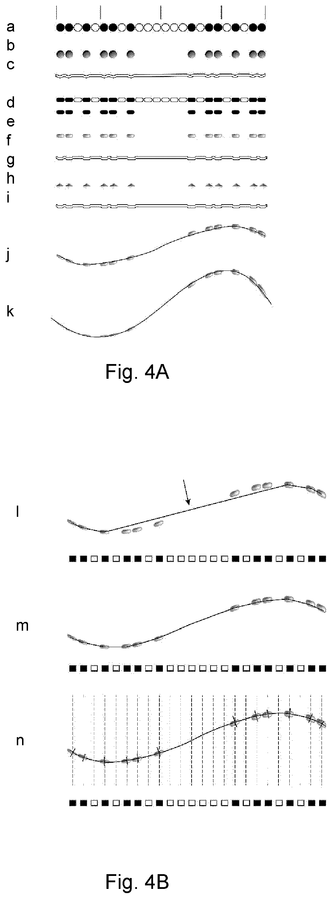

Figure 4A respectively depicts (a) an example of a dot code, likewise to Figure 1 depicted along a straight line, (b) the intrusions of the dot code as may be visible in an image in case the other value of the dots is encoded as no deformation, (c) a cross sectional view of the surface of the item, (d) (e) a representation of the dots, whereby the recesses are represented by black dots and the non-deformed dots are represented by white dots (d) respectively by blanks (e), (f) an image of highlights and shades as may be generated when illuminating the surface of the item by a source of radiation, the intrusions providing in the present example for a shade at the respective left side of each intrusion and a highlight at the respective right side of each dot. (g), (h)a cross sectional view, a representation of the recesses (no deformation being represented by blank), and (i), (j) and (j) embodiments of the dot code pattern whereby the dots are arranged along a curve, and interpolated reading lines RL that follow the curve whereby (i) represents a cross section al view and (j) and (k) represent top views whereby a reading line is interpolated. The linear dot patterns may be arranged in a curve as a result of the linear dot pattern being curved by itself, i.e. arranged on the surface of the item in curve, or in that the surface of the item is bent, causing the linear dot code pattern to curve due to the bending. Furthermore, as the surface of the item may be round (e.g. in the case of a bottle), the intended shape of the surface of the item may play a role as well in the shape of the dot code pattern as imaged.

Figure 4B depicts examples based on which an interpolation will be explained.

First, an image of the item is taken, e.g. by a camera. An example of a part of the image is depicted as (I). Then, in the image, the predefined dot start and dot end codes, e.g. in the present example 11010 are searched, and found at both ends of the pattern. Then, a reading line is interpolated from the predefined start code to the predefined dot end code. Embodiments of such interpolation are successively shown at (I) depicting an embodiment of a first order interpolation (m) depicting an embodiment of a second order interpolation, and (n) depicting an embodiment of a third order interpolation. It is noted that the first order interpolation may be performed taking account of two data points, e.g. in the present example the most centrally located dot of the predefined dot start code and the predefined dot end code. The first order interpolation may be able to be performed at low data processing requirements, however may be less accurate in predicting a position of the dots. As Shown at (I), the first order reading line may not be able to take into account the directions of the predefined dot start code and dot end code, hence may provide an inaccurate reading line, in particular in case the directions of the predefined dot start code and predefined dot end code differ from each other or if the predefined dot start code and predefined dot end code are not aligned relative to each other. Accordingly, as seen in Figure 4B at (I), the second order reading line may more accurately follow the dots, while the third order may be yet more accurate, as the third order interpolation may provide more degrees of freedom. The interpolations at (I), (m) and (n) are each performed using the predefined dot start code and the predefined dot end code as the starting point for interpolation. The second and third order interpolations may take into account the orientation direction) of the predefined dot start code and the predefined dot end code as well, i.e. may use the locations of plural ones of the dots of the predefined dot start code and the locations of plural ones of the dots of the predefined dot end code as a starting point for the interpolation.

Hence, the interpolation of the Bezier-curve, first start at a straight line between an end of the start-dots and a start of the end-dots, next step is forming the Bezier-curve taking account of the orientation of the start codes and the orientation of the end dots. If the code is read along e.g. the x-axis, the dot code becomes readable.

Having interpolated the reading line, the dot codes may be read along the reading line. Thus, blank dots (non-deformed dots), such as various ones of the dots in the present example, may be retrieved, as the absence of a deformation along parts of the reading line may be interpreted as the presence of the blank dots.

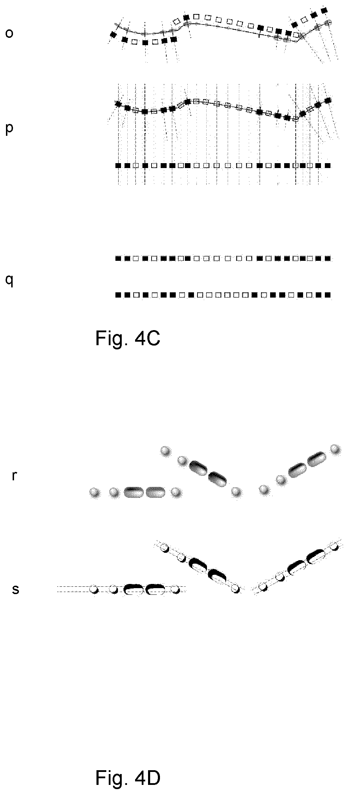

Figure 4C depicts at (o) a linear dot code pattern that is provided with two bends, i.e. two kinks. Having detected the predefined dot start code and predefined dot end code in the image, the interpolation starts from the predefined dot start code, whereby, iteratively, each time a next dot is taken into account in the interpolation process. The interpolation may succeed, e.g. stating from the left side, until the dot at the right side of the first kink is detected. The process may take place as follows:
- interpolating a candidate reading line from at least three consecutive dots in the image, e.g. starting from the left side in the image;
- extrapolating the candidate reading line to an expected position of a following one of the dots;
- detecting in the image a position the following one of the dots;
- in case the detected position of the following one of the dots coincides with the expected position of the following one of the dots:
   - interpolating a following candidate reading line from the at least three consecutive dots and the following one of the dots.

This process may take place until the first kink in the dot pattern is reached. Then, it is detected that a difference between the detected position of the following one of the dots and the expected position of the following one of the dots exceeds a predetermined position threshold. In this case, the process proceeds by:
- assigning the candidate reading line to a reading line part associated with the at least three consecutive dots in the image, i.e. in the present case the dots at the led side of the kink, and

- interpolating a following candidate reading line for at least three following ones of the dots in the image, i.e. the three following dots at the right side of the kink.

The process may again start with a new interpolation at the following kink.

Thus, three reading line parts are obtained as a result of the interpolation. The reading line is now formed from the 3 reading line parts connected to each other. Then, the reading of the dots along the reading line may take place. It is noted that at (o), for illustrative purposes, the dots are depicted adjacent to the curve. A result of the reading is depicted at (p), top part of the image. The read pattern of dots is then aligned, see (p), bottom part, towards a straight line, following which the spacing of the dots is made equidistant, see (q), compare top part with an irregular distance between the dots, to the bottom part where to distance between the dots is set to a fixed value, i.e. the dots being aligned to a raster. The alignment may be particularly beneficial in the case where one of the dot values is represented by no deformation of the surface of the item, thus only one dot value resulting in a detection of a dot in the image. The other dots are then in fact derived by "reading" along the raster, the empty raster points as dots having the "non-deformed" value.

Thus, in case the interpolation cannot be done with a smooth Bezier-curve, there must be an edge in the dot code. Then interpolation is done on one or more parts of the dot code. The dot code is then again read along e.g. the x-axis and interpreted.

Figure 4D depicts at (r) and (s) a dot code that is represented by bumps and recesses. As a result of illumination of the bumps and recesses, highlights and shades will be generated. For a bump, the highlight will be in a contour of the bump at a side facing towards the source of light while for a recess, the highlight will be in a contour of the recess at a side facing away from the source of light. Thus, highlights of bumps and recessed may be offset as regards the position thereof in respect of each other. Similarly, for a bump, the shade will be outside a contour of the bump at a side facing away from the source of light while for a recess, the shade will be in a contour of the recess at a side facing towards the source of light. Thus, likewise to the highlights, the shades of bump and recess are offset in respect of each other. This effect may even be enhanced when the bump and recess have different shapes, for example the bumps are small dots and recesses are larger rounded squares or rectangles. The determination if the highlights and shades relate to a bump or a recess may be performed making use of the offsets in the positions of highlights and shades, taking account of a known direction of incidence of the illumination that results in the highlights and shades.

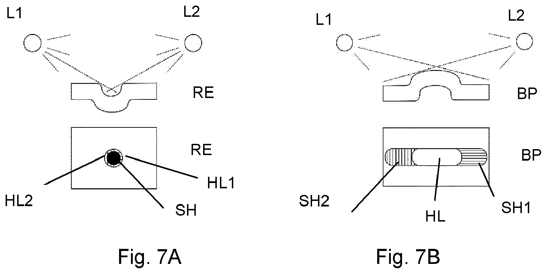

This effect may be enhanced by applying two light sources illuminating the item from at least partly opposing directions and e.g. irradiating at a different wavelength range, e.g. at a different colour. Figures 7A illustrates a detection of a recess RE. Figure 7A, top part, depicts two light sources L1, L2 irradiating the recess, resulting in a shade SH in the contour of the recess as a result of the irradiation from the two at least partly opposing sides and highlights HL2, HL2 at the edges the contour of the recess, i.e. highlight HL1 as a result of the irradiation by light source L1 and highlight HL2 as a result of the irradiation by light source L2. The light sources radiate, seen along a direction parallel to the surface of the item, from mutually opposing directions. Figure 7B illustrates a detection of a bump BP. As a result of the bump, shades SH1 and Sh2 are generated on the two outer contours of the bump facing away from the respective light source L1, L2, i.e. shade SH1 as a result of the irradiation by light source L1 and shade SH2 as a result of the irradiation by light source L2. Furthermore, highlights HL are generated at the inner contour of the bump, namely on the sides facing the respective light source. Thus, the recess (Fig. 7A) and bump (Fig. 7B) result in different optical patterns of highlights and shades, which are relatively easily and quickly detected in an image based on the geometric outline and size of the pattern of highlights and shades of each bump respectively each recess.

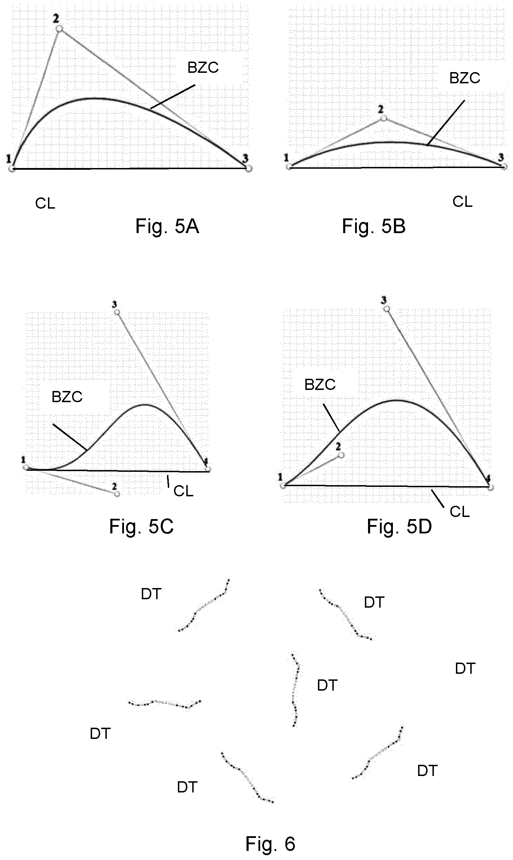

Figure 5A and 5B each schematically depict a three point Bezier curve BZC. Figure 5 further depicts the Bezier curve including the Bezier points that define the Bezier curve, namely the first and last one of the data points (dots) that are taken into account, and the third Bezier point outside the curve.

The Bezier points may be defined as follows. The ends of the Bezier curve are defined by a first Bezier point 1 and a third Bezier point 3. A second Bezier point 2 defines a path of the Bezier curve from the first Bezier point to the third Bezier point. For example a data bit may be encoded in an angle ANG between a line from the first Bezier point 1 to the second Bezier point B and a line from the first Bezier point 1 to the third Bezier point 3. The angle may be in an (absolute) range between 0 degrees and 90 degrees. For example, a bit is assigned based on the determination if the angle is (in absolute terms) > 45 degrees as depicted in Figure 5A or > 45 degrees as depicted in Figure 5B.

Figure 5C and 5D each depict a 4 point Bezier curve, each end of the Bezier curve is likewise defined by a first 1 and fourth 4 Bezier point. Second 2 and third 3 Bezier points define a path of the Bezier curve from the first Bezier point 1 to the fourth Bezier point 4. An angle is defined between a line from the first Bezier point to the second Bezier point and a line from the first Bezier point to the fourth Bezier point. Likewise, an angle is defined between a line from the fourth Bezier point to the third Bezier point and a line from the fourth Bezier point to the first Bezier point. Data may be encoded in both angles similarly to the 3 point Bezier curve. Alternatively, as a more robust encoding, a data bit may be encoded in the 4 point Bezier curve as follows: if the second and third Bezier point are on opposite sides of the connecting line CL between the first and fourth Bezier points as depicted in Figure 5C, the bit is assigned one binary value, and if the second and third Bezier point are on a same side of the line between the first and fourth Bezier points as depicted in Figure 5D, the bit is assigned the other binary value

Figure 6 depicts a part of a surface of an item provided with plural copies of the dot code DT, the copies of the dot code pattern being spread over the surface of the item and being arranged at different orientation, i.e. being arranged in different directions on the surface of the item. Thus, in case one or more of the dot code patterns appears to be difficult to read, e.g. due to reflections, contamination, etc., one of the other dot code patterns may be read instead.

## Claims

1. A method of identifying an item (IT), e.g. waste item,
wherein the item comprises a dot code (DT) comprising plural dots, the dots of the dot code being spaced apart along a dot code line extending along a surface of the item and form a linearly extending string of dots on the dot code line, the dot code comprising a predefined dot start code (STA) defining a start of the dot code, a predefined dot end code (STP) defining an end of the dot code, and an identification dot code (D1, D2) arranged between the predefined dot start code and the predefined dot end code, the predefined dot start code, the identification code and the predefined dot end code being arranged on the dot code line, the method comprising:
- capturing by a camera an image of the item,
- searching in the image the predefined dot start code,
- searching in the image the predefined dot end code,
- determining in the image a direction of the predefined dot start code, the direction of the predefined dot start code being an orientation of the predefined dot start code in the image,
- determining in the image a direction of the predefined dot end code, the direction of the predefined dot end code being an orientation of the predefined dot end code in the image,
- interpolating in the image a reading line to extend from the predefined dot start code to the predefined dot end code and connecting the predefined dot start code to the predefined dot end code, wherein a direction of the reading line at the predefined dot start code corresponds to the direction of the predefined dot start code, wherein the direction of the reading line at the predefined dot end code corresponds to the direction of the predefined dot end code,
- reading along the reading line the dots from the image, and
- deriving the identification code from the dots as read along the reading line between the predefined dot start code and the predefined dot end code,
wherein the predefined dot end code and the predefined dot start code represent a same dot code, when read towards a centre of the linearly extending dot code.

2. The method according to claim 1, wherein the reading line is interpolated according to a Bezier curve.

3. The method according to any of the preceding claims , wherein the interpolating in the image the reading line comprises:
interpolating in the image a curve to extend from the predefined dot start code to the predefined dot end code, wherein a direction of the curve at the predefined dot start code corresponds to the direction of the predefined dot start code, wherein the direction of the curve at the predefined dot end code corresponds to the direction of the predefined dot end code,
- interpolating a candidate reading line from at least three consecutive dots in the image;
- extrapolating the candidate reading line along the curve to an expected position of a following one of the dots;
- detecting in the image a position the following one of the dots;
- in case the detected position of the following one of the dots adheres to the expected position of the following one of the dots;
- interpolating a following candidate reading line from the at least three consecutive dots and the following one of the dots.

4. The method according to claim 3, further comprising adjusting the curve according to the following candidate reading line.

5. The method according to claim 3 or 4, wherein
- in case a difference between the detected position of the following one of the dots and the expected position of the following one of the dots exceeds a predetermined position threshold:
- assigning the candidate reading line to a reading line part associated with the at least three consecutive dots in the image, and
- interpolating a following candidate reading line for at least three following ones of the dots in the image.

6. The method according to any of the preceding claims, wherein the method further comprises:
determining Bezier points that define the Bezier curve, and
deriving additional data from respective locations of the Bezier points.

7. The method according to any of the preceding claims, wherein the identification code is arranged in duplicate along the dot code line between the predefined dot start code and the predefined dot end code, wherein the duplicates are formed by a respective reading from the predefined dot start code to a centre of the linearly extending dot code and by a respective reading from the predefined dot end code to a centre of the linearly extending dot code.

8. The method according to any of the preceding claims, wherein each of the dots has a binary value, at least one of the binary values being represented by a predefined local deformation of the surface of the item, wherein preferably the other one of the binary values is represented by no local deformation of the surface of the item, wherein preferably the predefined dot start code starts with two dots having a value represented by the predefined local deformation, wherein preferably the predefined local deformation is a protrusion.

9. The method according to any of claims 1 - 7, wherein each of the dots has a ternary value, at least two of the ternary values being represented by respective predefined local deformations of the surface of the item, wherein preferably the third one of the ternary values is represented by no local deformation of the surface of the item, wherein preferably the predefined dot start code starts with two dots having a value represented by the respective predefined local deformations, wherein preferably one of the predefined local deformations is a protrusion and the other one of the predefined local deformations in an intrusion.

10. The method according to any of the preceding claims, wherein reading locations are arranged equidistantly along the reading lines, and wherein the dots are read along the reading line at the equidistant reading locations.

11. The method according to any of the preceding claims, wherein a plurality of the dot codes is provided on the item, the dot codes each provided in a different orientation along the surface of the item.

12. Method of waste separation comprising:
- identifying the item according to the method of any of claims 1 - 11, and
- separating the item in accordance with the identification.

13. An item (IT) comprising a dot code (DT) comprising plural dots, the dots of the dot code being spaced apart along a dot code line extending along a surface of the item and form a linearly extending string of dots on the dot code line, the dot code comprising a predefined dot start code (STA) defining a start of the dot code, a predefined dot end code (STP) defining an end of the dot code, and an identification dot code (D1, D2) arranged between the predefined dot start code and the predefined dot end code, the predefined dot start code, the identification code and the predefined dot end code being arranged on the dot code line, wherein the predefined dot end code and the predefined dot start code represent a same dot code, when read towards a centre of the linearly extending dot code.

14. The item according to claim 13 wherein the dot code line forms a Bezier curve.

15. The item according to claim 14, wherein additional data is encoded in respective locations of Bezier points that define the Bezier curve.

16. The item according to any of claims 13 - 15, wherein the identification code is arranged in duplicate along the dot code line between the predefined dot start code and the predefined dot end code, wherein the duplicates extend from the predefined dot start code to a centre of the linearly extending dot code and from the predefined dot end code to a centre of the linearly extending dot code.

17. The item according to any of claims 13 - 16, wherein each of the dots has a binary value, at least one of the binary values being represented by a predefined local deformation of the surface of the item, wherein preferably the other one of the binary values is represented by no local deformation of the surface of the item, wherein preferably the predefined dot start code starts with two dots having a value represented by the predefined local deformation, wherein preferably the predefined local deformation is a protrusion.

18. The item according to any of claims 13 - 16, wherein each of the dots has a ternary value, at least two of the ternary values being represented by respective predefined local deformations of the surface of the item, wherein preferably the third one of the ternary values is represented by no local deformation of the surface of the item, wherein preferably the predefined dot start code starts with two dots having a value represented by the respective predefined local deformations, wherein preferably one of the predefined local deformations is a protrusion and the other one of the predefined local deformations in an intrusion.

19. The item according to any of claims 13 - 18, wherein a plurality of the dot codes is provided on the item, the dot codes each provided in a different orientation along the surface of the item.

## Patentansprüche

1. Verfahren zur Identifizierung eines Gegenstands (IT), z. B. eines Abfallgegenstands, wobei der Gegenstand einen Punktcode (DT) umfasst, der mehrere Punkte umfasst, wobei die Punkte des Punktcodes entlang einer Punktcodelinie, die sich entlang einer Oberfläche des Gegenstands erstreckt, voneinander beabstandet sind und eine sich linear erstreckende Kette von Punkten auf der Punktcodelinie bilden, wobei der Punktcode einen vordefinierten Punktstartcode (STA), der einen Anfang des Punktcodes definiert, einen vordefinierten Punktendcode (STP), der ein Ende des Punktcodes definiert, und einen Identifizierungspunktcode (D1, D2) umfasst, der zwischen dem vordefinierten Punktstartcode und dem vordefinierten Punktendcode angeordnet ist, wobei der vordefinierte Punktstartcode, der Identifizierungscode und der vordefinierte Punktendcode auf der Punktcodelinie angeordnet sind, wobei das Verfahren umfasst:
- Aufnehmen eines Bildes des Gegenstands durch eine Kamera,
- Suchen nach dem vordefinierten Punktstartcode im Bild,
- Suchen nach dem vordefinierten Punktendcode im Bild,
- Bestimmen einer Richtung des vordefinierten Punktstartcodes im Bild, wobei die Richtung des vordefinierten Punktstartcodes eine Ausrichtung des vordefinierten Punktstartcodes im Bild ist,
- Bestimmen einer Richtung des vordefinierten Punktendcodes im Bild, wobei die Richtung des vordefinierten Punktendcodes eine Ausrichtung des vordefinierten Punktendcodes im Bild ist,
- Interpolieren einer Leselinie in dem Bild, sodass sie sich von dem vordefinierten Punktstartcode zu dem vordefinierten Punktendcode erstreckt und den vordefinierten Punktstartcode mit dem vordefinierten Punktendcode verbindet, wobei eine Richtung der Leselinie an dem vordefinierten Punktstartcode der Richtung des vordefinierten Punktstartcodes entspricht, wobei die Richtung der Leselinie an dem vordefinierten Punktendcode der Richtung des vordefinierten Punktendcodes entspricht,
- Lesen der Punkte aus dem Bild entlang der Leselinie, und
- Ableiten des Identifizierungscodes aus den entlang der Leselinie gelesenen Punkten zwischen dem vordefinierten Punktstartcode und dem vordefinierten Punktendcode,
wobei der vordefinierte Punktendcode und der vordefinierte Punktanfangscode einen gleichen Punktcode darstellen, wenn sie in Richtung einer Mitte des sich linear erstreckenden Punktcodes gelesen werden.

2. Verfahren nach Anspruch 1, wobei die Leselinie gemäß einer Bézierkurve interpoliert wird.

3. Verfahren nach einem der vorhergehenden Ansprüche, wobei das Interpolieren der Leselinie im Bild umfasst:
Interpolieren einer Kurve in dem Bild, um sich von dem vordefinierten Punktstartcode zu dem vordefinierten Punktendcode zu erstrecken, wobei eine Richtung der Kurve an dem vordefinierten Punktstartcode der Richtung des vordefinierten Punktstartcodes entspricht, wobei die Richtung der Kurve an dem vordefinierten Punktendcode der Richtung des vordefinierten Punktendcodes entspricht,
- Interpolieren einer Kandidatenleselinie aus mindestens drei aufeinanderfolgenden Punkten in dem Bild;
- Extrapolieren der Kandidatenleselinie entlang der Kurve zu einer erwarteten Position eines folgenden der Punkte;
- Erkennen einer Position in dem Bild des folgenden der Punkte;
- wenn die erkannte Position des folgenden der Punkte mit der erwarteten Position des folgenden der Punkte übereinstimmt;
- Interpolieren einer folgenden Kandidatenleselinie aus den mindestens drei aufeinanderfolgenden Punkten und dem folgenden der Punkte.

4. Verfahren nach Anspruch 3, ferner umfassend das Anpassen der Kurve gemäß der folgenden Kandidatenleselinie.

5. Verfahren nach Anspruch 3 oder 4, wobei
- wenn eine Differenz zwischen der erkannten Position des folgenden der Punkte und der erwarteten Position des folgenden der Punkte eine vorbestimmte Positionsschwelle überschreitet:
- Zuordnen der Kandidatenleselinie zu einem Leselinienteil, der mit den mindestens drei aufeinanderfolgenden Punkten in dem Bild assoziiert ist, und
- Interpolieren einer folgenden Kandidatenleselinie für mindestens drei folgende der Punkte in dem Bild.

6. Verfahren nach einem der vorhergehenden Ansprüche, wobei das Verfahren ferner umfasst:
Bestimmen von Bézierpunkten, die die Bézierkurve definieren, und
Ableiten zusätzlicher Daten aus den jeweiligen Positionen der Bézierpunkte.

7. Verfahren nach einem der vorhergehenden Ansprüche, wobei der Identifizierungscode in doppelter Ausführung entlang der Punktcodelinie zwischen dem vordefinierten Punktanfangscode und dem vordefinierten Punktendcode angeordnet ist, wobei die Duplikate durch ein jeweiliges Lesen ab dem vordefinierten Punktanfangscode bis zu einer Mitte des linear verlaufenden Punktcodes und durch ein jeweiliges Lesen ab dem vordefinierten Punktendcode bis zu einer Mitte des linear verlaufenden Punktcodes gebildet werden.

8. Verfahren nach einem der vorhergehenden Ansprüche, wobei jeder der Punkte einen binären Wert hat, wobei mindestens einer der binären Werte durch eine vordefinierte lokale Verformung der Oberfläche des Gegenstands dargestellt wird, wobei vorzugsweise der andere der binären Werte durch keine lokale Verformung der Oberfläche des Gegenstands dargestellt wird, wobei vorzugsweise der vordefinierte Punktstartcode mit zwei Punkten beginnt, die einen Wert haben, der durch die vordefinierte lokale Verformung dargestellt wird, wobei vorzugsweise die vordefinierte lokale Verformung ein Vorsprung ist.

9. Verfahren nach einem der Ansprüche 1 - 7, wobei jeder der Punkte einen ternären Wert hat, wobei mindestens zwei der ternären Werte durch entsprechende vordefinierte lokale Verformungen der Oberfläche des Gegenstands dargestellt werden, wobei vorzugsweise der dritte der ternären Werte durch keine lokale Verformung der Oberfläche des Gegenstands dargestellt wird, wobei vorzugsweise der vordefinierte Punktstartcode mit zwei Punkten beginnt, die einen Wert haben, der durch die jeweiligen vordefinierten lokalen Verformungen dargestellt wird, wobei vorzugsweise eine der vordefinierten lokalen Verformungen ein Vorsprung und die andere der vordefinierten lokalen Verformungen eine Einbuchtung ist.

10. Verfahren nach einem der vorhergehenden Ansprüche, wobei die Lesepositionen äquidistant entlang der Leselinien angeordnet sind und wobei die Punkte entlang der Leselinien an den äquidistanten Lesepositionen gelesen werden.

11. Verfahren nach einem der vorhergehenden Ansprüche, wobei eine Vielzahl der Punktcodes auf dem Gegenstand vorgesehen ist, wobei die Punktcodes jeweils in einer unterschiedlichen Ausrichtung entlang der Oberfläche des Gegenstands vorgesehen sind.

12. Verfahren zur Abfalltrennung, umfassend:
- Identifizieren des Gegenstands gemäß dem Verfahren nach einem der Ansprüche 1 - 11, und
- Trennen des Gegenstands gemäß der Identifizierung.

13. Gegenstand (IT) mit einem Punktcode (DT), der mehrere Punkte umfasst, wobei die Punkte des Punktcodes entlang einer Punktcodelinie, die sich entlang einer Oberfläche des Gegenstands erstreckt, voneinander beabstandet sind und eine sich linear erstreckende Kette von Punkten auf der Punktcodelinie bilden, wobei der Punktcode einen vordefinierten Punktstartcode (STA), der einen Anfang des Punktcodes definiert, einen vordefinierten Punktendcode (STP), der ein Ende des Punktcodes definiert und einen Identifizierungspunktcode (D1, D2) umfasst, der zwischen dem vordefinierten Punktstartcode und dem vordefinierten Punktendcode angeordnet ist, wobei der vordefinierte Punktstartcode, der Identifizierungscode und der vordefinierte Punktendcode auf der Punktcodelinie angeordnet sind, wobei der vordefinierte Punktendcode und der vordefinierte Punktstartcode einen gleichen Punktcode darstellen, wenn sie in Richtung einer Mitte des sich linear erstreckenden Punktcodes gelesen werden.

14. Verfahren nach Anspruch 13, wobei die Punktcodelinie eine Bézierkurve bildet.

15. Gegenstand nach Anspruch 14, wobei zusätzliche Daten an den jeweiligen Positionen der Bézierpunkte codiert sind, die die Bézierkurve definieren.

16. Gegenstand nach einem der Ansprüche 13 - 15, wobei der Identifizierungscode in doppelter Ausführung entlang der Punktcodelinie zwischen dem vordefinierten Punktanfangscode und dem vordefinierten Punktendcode angeordnet ist, wobei sich die Duplikate von dem vordefinierten Punktanfangscode zu einer Mitte des linear verlaufenden Punktcodes und von dem vordefinierten Punktendcode zu einer Mitte des linear verlaufenden Punktcodes erstrecken.

17. Gegenstand nach einem der Ansprüche 13 - 16, wobei jeder der Punkte einen binären Wert hat, wobei mindestens einer der binären Werte durch eine vordefinierte lokale Verformung der Oberfläche des Gegenstands dargestellt wird, wobei vorzugsweise der andere der binären Werte durch keine lokale Verformung der Oberfläche des Gegenstands dargestellt wird, wobei vorzugsweise der vordefinierte Punktstartcode mit zwei Punkten beginnt, die einen Wert haben, der durch die vordefinierte lokale Verformung dargestellt wird, wobei vorzugsweise die vordefinierte lokale Verformung ein Vorsprung ist.

18. Gegenstand nach einem der Ansprüche 13 - 16, wobei jeder der Punkte einen ternären Wert hat, wobei mindestens zwei der ternären Werte durch entsprechende vordefinierte lokale Verformungen der Oberfläche des Gegenstands dargestellt werden, wobei vorzugsweise der dritte der ternären Werte durch keine lokale Verformung der Oberfläche des Gegenstands dargestellt wird, wobei vorzugsweise der vordefinierte Punktstartcode mit zwei Punkten beginnt, die einen Wert haben, der durch die jeweiligen vordefinierten lokalen Verformungen dargestellt wird, wobei vorzugsweise eine der vordefinierten lokalen Verformungen ein Vorsprung und die andere der vordefinierten lokalen Verformungen eine Einbuchtung ist.

19. Gegenstand nach einem der Ansprüche 13 - 18, wobei eine Vielzahl der Punktcodes auf dem Gegenstand vorgesehen ist, wobei die Punktcodes jeweils in einer unterschiedlichen Ausrichtung entlang der Oberfläche des Gegenstands vorgesehen sind.

## Revendications

1. Procédé d'identification d'un article (IT), par exemple un article de déchet,
dans lequel l'article comprend un code à points (DT) comprenant plusieurs points, les points du code à points étant espacés le long d'une ligne de code à points s'étendant le long d'une surface de l'article et formant une chaîne de points s'étendant linéairement sur la ligne de code à points, le code à points comprenant un code à points de début prédéfini (STA) définissant un début du code à points, un code à points de fin prédéfini (STP) définissant une fin du code à points, et un code à points d'identification (D1, D2) disposé entre le code à points de début prédéfini et le code à points de fin prédéfini, le code à points de début prédéfini, le code d'identification et le code à points de fin prédéfini étant disposés sur la ligne de code à points, le procédé comprenant :
- la capture par une caméra d'une image de l'article,
- la recherche dans l'image du code à points de début prédéfini,
- la recherche dans l'image du code à points de fin prédéfini,
- la détermination dans l'image d'une direction du code à points de début prédéfini, la direction du code à points de début prédéfini étant une orientation du code à points de début dans l'image,
- la détermination dans l'image d'une direction du code à points de fin prédéfini, la direction du code à points de fin prédéfini étant une orientation du code à points de fin dans l'image,
- l'interpolation dans l'image d'une ligne de lecture à étendre du code à points de début prédéfini au code à points de fin prédéfini et la liaison du code à points de début prédéfini au code à points de fin prédéfini, dans lequel une direction de la ligne de lecture au code à points de début prédéfini correspond à la direction du code à points de début prédéfini, dans lequel la direction de la ligne de lecture au code à points de fin prédéfini correspond à la direction du code à points de fin prédéfini,
- la lecture le long de la ligne de lecture des points de l'image, et
- la dérivation du code d'identification à partir des points tels que lus le long de la ligne de lecture entre le code à points de début prédéfini et le code à points de fin prédéfini,
dans lequel le code à points de fin prédéfini et le code à points de début prédéfini représentent un même code à points, lorsque lus en direction d'un centre du code à points s'étendant linéairement.

2. Procédé selon la revendication 1, dans lequel la ligne de lecture est interpolée en fonction d'une courbe de Bézier.

3. Procédé selon l'une quelconque des revendications précédentes, dans lequel l'interpolation dans l'image de la ligne de lecture comprend :
l'interpolation dans l'image d'une courbe à étendre du code à points de début prédéfini au code à points de fin prédéfini, dans lequel une direction de la courbe au code à points de début prédéfini correspond à la direction du code à points de début prédéfini, dans lequel la direction de la courbe au code à points de fin prédéfini correspond à la direction du code à points de fin prédéfini,
- l'interpolation d'une ligne de lecture candidate à partir d'au moins trois points consécutifs dans l'image ;
- l'extrapolation de la ligne de lecture candidate le long de la courbe à une position prévue de l'un suivant parmi les points ;
- la détection dans l'image d'une position du point suivant parmi les points ;
lorsque la position détectée du point suivant parmi les points correspond à la position prévue du point suivant parmi les points ;
- l'interpolation d'une ligne de lecture candidate suivante à partir d'au moins trois points consécutifs et du point suivant parmi les points.

4. Procédé selon la revendication 3, comprenant en outre l'ajustement de la courbe en fonction de la ligne de lecture candidate suivante.

5. Procédé selon la revendication 3 ou 4, dans lequel
- lorsqu'une différence entre la position détectée du point suivant parmi les points et la position prévue du point suivant parmi les points dépasse un seuil de position prédéterminé :
- l'attribution de la ligne de lecture candidate à une partie de ligne de lecture associée aux au moins trois points consécutifs dans l'image, et
- l'interpolation d'une ligne de lecture candidate suivante pour au moins trois points suivants parmi les points dans l'image.

6. Procédé selon l'une quelconque des revendications précédentes, dans lequel le procédé comprend en outre :
la détermination de points de Bézier qui définissent une courbe de Bézier, et
la dérivation de données supplémentaires à partir d'emplacements respectifs des points de Bézier.

7. Procédé selon l'une quelconque des revendications précédentes, dans lequel le code d'identification est disposé en double le long de la ligne de code à points entre le code à points de début prédéfini et le code à points de fin prédéfini, dans lequel les doubles sont formés par une lecture respective du code à points de début prédéfini à un centre du code à points s'étendant linéairement et par une lecture respective du code à points de fin prédéfini à un centre du code à points s'étendant linéairement.

8. Procédé selon l'une quelconque des revendications précédentes, dans lequel chacun des points présente une valeur binaire, au moins l'une des valeurs binaires étant représentée par une déformation locale prédéfinie de la surface de l'article, dans lequel de préférence l'autre des valeurs binaires est représentée par l'absence de déformation locale de la surface de l'article, dans lequel de préférence le code à points de débuts prédéfini commence avec deux points ayant une valeur représentée par la déformation locale prédéfinie, dans lequel de préférence la déformation locale prédéfinie est une protubérance.

9. Procédé selon l'une quelconque des revendications 1 à 7, dans lequel chacun des points présente une valeur ternaire, au moins deux des valeurs ternaires étant représentées par des déformations locales prédéfinies de la surface de l'article, dans lequel de préférence la troisième des valeurs ternaires est représentée par l'absence de déformation locale de la surface de l'article, dans lequel de préférence le code à points de débuts prédéfini commence avec deux points ayant une valeur représentée par les déformations locales prédéfinies respectives, dans lequel de préférence l'une des déformations locales prédéfinies est une protubérance et l'autre des déformations locales prédéfinies est une intrusion.

10. Procédé selon l'une quelconque des revendications précédentes, dans lequel les emplacements de lecture sont disposés de façon équidistante le long des lignes de lecture, et dans lequel les points sont lus le long de la ligne de lecture aux emplacements de lecture équidistants.

11. Procédé selon l'une quelconque des revendications précédentes, dans lequel une pluralité des codes à points sont placés sur l'article, les codes à points étant chacun placé suivant une orientation différente le long de la surface de l'article.

12. Procédé de séparation de déchets comprenant :
- l'identification de l'article selon le procédé selon l'une quelconque des revendications 1 à 11, et
- la séparation de l'article en fonction de l'identification.

13. Article (IT) comprenant un code à points (DT) comprenant plusieurs points, les points du code à points étant espacés le long d'une ligne de code à points s'étendant le long d'une surface de l'article et formant une chaîne de points s'étendant linéairement sur la ligne de code à points, le code à points comprenant un code à points de début prédéfini (STA) définissant un début du code à points, un code à points de fin prédéfini (STP) définissant une fin du code à points, et un code de point d'identification (D1, D2) disposé entre le code à points de début prédéfini et le code à points de fin prédéfini, le code à points de début prédéfini, le code d'identification et le code à points de fin prédéfini étant disposés sur la ligne de code à points, dans lequel le code à points de fin prédéfini et le code à points de début prédéfini représentent un même code à points, lorsque lus en direction d'un centre du code à points s'étendant linéairement.

14. Article selon la revendication 13, dans lequel la ligne de code à points forme une courbe de Bézier.

15. Article selon la revendication 14, dans lequel des données supplémentaires sont codées dans des emplacements respectifs de points de Bézier qui définissent la courbe de Bézier.

16. Article selon l'une quelconque des revendications 13 à 15, dans lequel le code d'identification est disposé en double le long de la ligne de code à points entre le code à points de début prédéfini et le code à points de fin prédéfini, dans lequel les doubles s'étendent du code à points de début à un centre du code à points s'étendant linéairement et du code à points de fin à un centre du code à points s'étendant linéairement.

17. Article selon l'une quelconque des revendications 13 à 16, dans lequel chacun des points présente une valeur binaire, au moins l'une des valeurs binaires étant représentée par une déformation locale prédéfinie de la surface de l'article, dans lequel de préférence l'autre des valeurs binaires est représentée par l'absence de déformation locale de la surface de l'article, dans lequel de préférence le code à points de débuts prédéfini commence avec deux points ayant une valeur représentée par la déformation locale prédéfinie, dans lequel de préférence la déformation locale prédéfinie est une protubérance.

18. Article selon l'une quelconque des revendications 13 à 16, dans lequel chacun des points présente une valeur ternaire, au moins deux des valeurs ternaires étant représentées par des déformations locales prédéfinies de la surface de l'article, dans lequel de préférence la troisième des valeurs ternaires est représentée par l'absence de déformation locale de la surface de l'article, dans lequel de préférence le code à points de débuts prédéfini commence avec deux points ayant une valeur représentée par les déformations locales prédéfinies respectives, dans lequel de préférence l'une des déformations locales prédéfinies est une protubérance et l'autre des déformations locales prédéfinies est une intrusion.

19. Article selon l'une quelconque des revendications 13 à 18, dans lequel une pluralité des codes à points sont placés sur l'article, les codes à points étant chacun placé suivant une orientation différente le long de la surface de l'article.
